# EUROPEAN PATENT SPECIFICATION

(11) **EP 4 042 026 B1**
(45) Date of publication and mention of the grant of the patent: **20.08.2025**
(21) Application number: 20817223.9
(22) Date of filing: 18.10.2020
(51) Int. Cl.: F16B 5/02, B64C 3/26, B64F 5/10

(54) **LIQUID SHIM FOR JOINTS AND METHODS OF CREATING AND APPLYING SAME**
FLÜSSIGER SPALTAUSGLEICH FÜR GELENKE UND VERFAHREN ZU DEREN HERSTELLUNG UND ANWENDUNG
CALE LIQUIDE POUR JOINTS ET PROCÉDÉS DE CRÉATION ET D'APPLICATION DE CETTE DERNIÈRE

(30) Priority: 18.10.2019 GB 201915113
(43) Date of publication of application: 17.08.2022
(73) Proprietor: Short Brothers Plc, Belfast, Antrim BT3 9DZ (GB)
(72) Inventor: WALSH, Robert Matthew, Belfast Antrim BT3 9DZ (GB); DALY, Jonathan Andrew, Belfast Antrim BT3 9DZ (GB); WILSON, Robert Samuel, Belfast Antrim BT3 9DZ (GB); BRANIFF, Mark, Belfast Antrim BT3 9DZ (GB)
(74) Representative: HGF
(86) International application number: PCT/EP2020/079300
(87) International publication number: WO 2021/074442

(56) References cited:
- WO-A1-2019/239273
- WO-A1-2020/153082
- GB-A- 2 413 164
- US-A1- 2019 003 504

## Description

### TECHNICAL FIELD

The application relates generally to joints between components and more particularly, but not exclusively, to shims used in such joints. This application claims priority from UK Patent Application No. GB1915113.3, filed 18th October 2019.

### BACKGROUND

It may be necessary to shim or fill the gap between components joined together. One technique for doing so involves using a peelable polyimide solid shim. Producing and applying such solid shims is a laborious task because it may involve manual gap measurement followed by manual sculpting of a peelable sheet material to varying shapes and thicknesses. These peelable shim materials may also be relatively expensive.

Another technique includes applying a paste or "butter" into the gap. This type of shim may be difficult to apply in a large joint, and further down the line, may be difficult to clean due to its highly viscous nature. Since it is difficult to apply, there is a risk of uneven application and of non-structural voids which must be detected and repaired.

An example of a document which describes means for compensating uneven surfaces to allow joining of a structure and an anchor, by using a settable material, can be found in GB 2 413 164 A.

### SUMMARY

Aspects of the invention provide a liquid shim and a method as claimed in the appended claims.

According to an embodiment of the disclosure, a liquid shim comprises a bag defining a closed inner volume and having sealed openings spaced inwardly from a periphery of the bag. The sealed openings may be sealed from the closed inner volume and delimit holes extending through the bag. The liquid shim material may be flowable through the closed inner volume around the sealed openings and may be curable to form a solid. The liquid shim material may have a liquid shim material volume being less than the closed inner volume of the bag.

In an embodiment, the periphery of the bag includes a peripheral portion defining a peripheral edge of the bag. The peripheral portion may be temporarily closeable to decrease the closed inner volume. The peripheral portion may be expandable.

In an embodiment the peripheral portion is folded about a fold line spaced inwardly from the peripheral edge. The peripheral portion may be unfoldable about the fold line to close and expand the peripheral portion.

In an embodiment, a pressure within the bag is approximately zero.

The method may comprise permanently fastening the components together over the solid shim after removing the sealed bag from the solid shim.

The method may comprise removing the sealed bag from a cold-storage unit before positioning the sealed bag in the gap.

In an embodiment, displacing the components towards one another includes compressing portions of the sealed bag to further compress the liquid shim material and fill the gap.

In an embodiment, curing the compressed liquid shim material includes one or more of exposing the compressed liquid shim material to ambient temperature, and applying localized heat to the compressed liquid shim material.

In an embodiment, curing the compressed liquid shim material includes exposing the compressed liquid shim material to ambient temperature, and subsequently, applying localized heat to the compressed liquid shim material.

In an embodiment, curing the compressed liquid shim material includes applying localized heat to the compressed liquid shim material using one or more of convection heating, infra-red heating, and electrical-resistance heating.

According to a further aspect of the disclosure, a method of creating a liquid shim, comprises providing a liquid shim material into a sealed bag, the liquid shim material being flowable through an inner volume of the sealed bag and being curable to form a solid, the liquid shim material having a liquid shim material volume being less than the inner volume of the sealed bag.

In an embodiment, providing the liquid shim material into the sealed bag includes providing the liquid shim material into the sealed bag while reducing a pressure of the inner volume of the sealed bag.

In an embodiment, providing the liquid shim material into the sealed bag includes injecting the liquid shim material into the sealed bag.

In an embodiment, providing the liquid shim material into the sealed bag includes providing the liquid shim material into the sealed bag while reducing a pressure of a volume of air surrounding the sealed bag.

The method may comprise closing a portion of the sealed bag to decrease the inner volume of the sealed bag.

In an embodiment, closing the portion of the sealed bag includes closing the portion of the sealed bag before providing the liquid shim material into the sealed bag.

The method may comprise opening the portion of the sealed bag after providing the liquid shim material into the sealed bag.

In an embodiment, providing the liquid shim material into the sealed bag includes spreading the liquid shim material through the inner volume of the sealed bag.

The method may comprise forming holes sealed from the inner volume and extending through the sealed bag before providing the liquid shim material into the sealed bag.

In an embodiment, forming the holes includes heat sealing the holes.

The method may comprise storing the liquid shim material in a cold-storage unit.

According to a still further aspect of the disclosure there is provided a joint between components defining a gap therebetween, the joint comprising a cured shim disposed within the gap and having a shape substantially similar to a shape of the gap, the cured shim having holes extending therethough, the joint having fasteners connecting the components and extending through the holes in the cured shim.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### DESCRIPTION OF THE DRAWINGS

One or more embodiments of the disclosure will now be described, by way of example only, with reference to the accompanying figures in which:
Fig. 1A is a tridimensional view of an aircraft;
Fig. 1B is a cross-sectional view of part of a wing of the aircraft of Fig. 1A, taken along the line IB-IB;
Fig. 1C is an enlarged view of part IC-IC in Fig. 1B, showing a shim of a joint between components of the wing;
Fig. 2A is a planar view of a liquid shim for forming the shim in Fig. 1C;
Fig. 2B is another planar view of the liquid shim of Fig. 2A;
Fig. 3A is a schematic cross-sectional view of components of a joint and the liquid shim of Fig. 2A, the components shown spaced apart;
Fig. 3B is a schematic cross-sectional view of components of the joint and the liquid shim of Fig. 2A, the components shown joined together;
Fig. 3C is a cross-sectional view of the joint of Fig. 1C;
Fig. 3D is an enlarged view of a liquid shim shown in part IIIC-IIIC of Fig. 3C;
Fig. 3E is an enlarged view of another possible liquid shim shown in part IIIC-IIIC of Fig. 3C;
Fig. 3F is an enlarged view of another possible liquid shim shown in part IIIC-IIIC of Fig. 3C;
Figs. 3G to 3J show one possible technique for trimming the solid of Fig. 1C;
Fig. 3K is a perspective view of the joint of Fig. 1C;
Figs. 3L to 3O are cross-sectional views of the joint in Fig. 3K taken along the line IIIK-IIIK;
Fig. 4A shows a bag of the liquid shim of Fig. 2A being provided with liquid shim material;
Fig. 4B shows more liquid shim material of Fig. 4A in the bag;
Fig. 4C shows a spreader displacing the liquid shim material of Fig. 4A through the bag;
Fig. 4D shows a prepared liquid shim of Fig. 2A;
Fig. 4E shows a tool for forming a hole in the bag of Fig. 4A;
Fig. 4F shows a bag of the liquid shim of Fig. 2A within a vacuum chamber;
Fig. 4G shows the bag of Fig. 4F being filled with a liquid shim material;
Fig. 4H is another view of the spreader of Fig. 4C;
Fig. 4I is an enlarged view of part IVI-IVI in Fig. 4H;
Fig. 4J is a view of another type of spreader of Fig. 4C; and
Fig. 4K is an enlarged view of part IVK-IVK in Fig. 4J.

### DETAILED DESCRIPTION

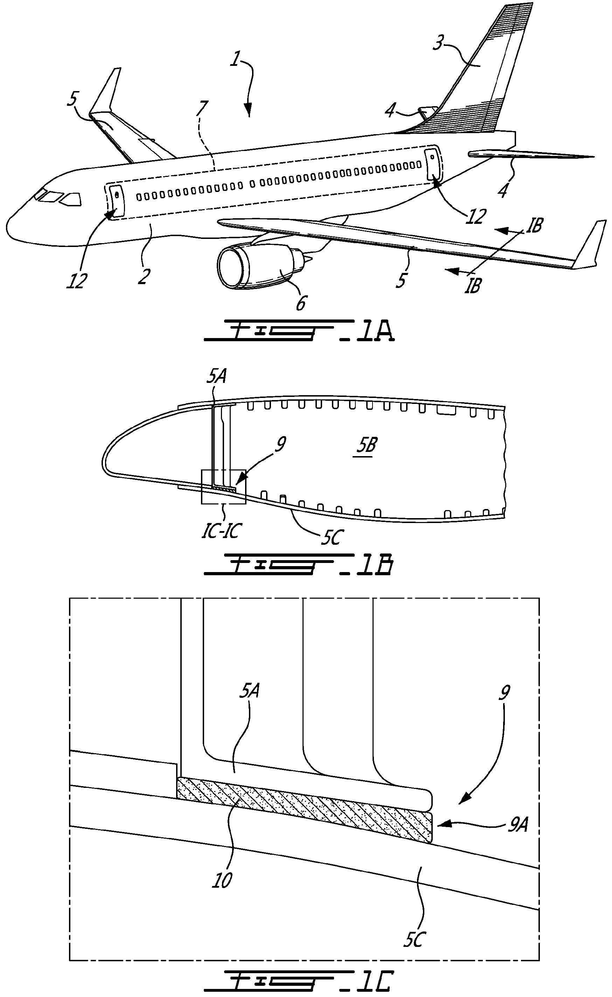

Referring to the drawings and more particularly to Fig. 1A, an aircraft is shown at 1, and is generally described to illustrate some components in the present disclosure. The aircraft 1 has a fuselage 2 having a fore end at which a cockpit is located, and an aft end supporting a tail assembly. The tail assembly comprises a vertical stabilizer 3 with a rudder, and horizontal stabilizers 4 with elevators. The tail assembly has a fuselage-mounted tail, but other configurations may also be used for the aircraft 1, such as cruciform, T-tail, etc. Wings 5 project laterally from the fuselage 2. The aircraft 1 has engines 6 supported by the wings 5, although the engines 6 could also be mounted to the fuselage 2. The aircraft 1 is shown as a jet-engine aircraft, but may also be a propeller aircraft. The fuselage 2 defines a cabin 7 generally located between the cockpit and the tail assembly. The aircraft 1 has doors 12 configured to allow ingress to, and egress from, the cabin 7.

Referring to Figs. 1B and 1C, the aircraft 1 has joints 9 formed between adjacent components of the aircraft 1. The joints 9 may be formed between two or more components of the aircraft 1, whether the components are made from the same materials or different materials (e.g. composites and metal). One example of a possible joint 9 is shown in Figs. 1B and 1C. Fig. 1B shows the joint 9 formed between a front wing spar 5A of one of the wings 5, a rib 5B of the same wing 5, and part of the wing skin 5C.

Fig. 1C shows a magnified view of a portion of Fig. 1B in the region of the joint 9 between the front wing spar 5A and the wing skin 5C. As a result of the manufacture and assembly process, a gap 9A may form between the front wing spar 5A and the wing skin 5C. This gap 9A is filled by a shim 10. Shimming may be required between structures (such as the wing skin 5C and the front wing spar 5A). For some aircraft components, shimming is required to fill gaps between the components that occur when assembling them together, and/or when assembling components such as actuators, hinges, and brackets to a structure.

The shim 10 is a solid body that has a three-dimensional shape that is substantially similar to the three-dimensional shape of the gap 9A. By "substantially similar", it is understood that the shim 10 conforms to the shape of the gap 9A within acceptable limits or tolerances, such as those of the Gapman^{™} measuring system. The solid shim 10 occupies substantially all of the volume of the gap 9A and may abut against some or all of the surfaces of the components of the joint 9. The formation of the solid shim 10, and its placement in the gap 9A, are described in greater detail.

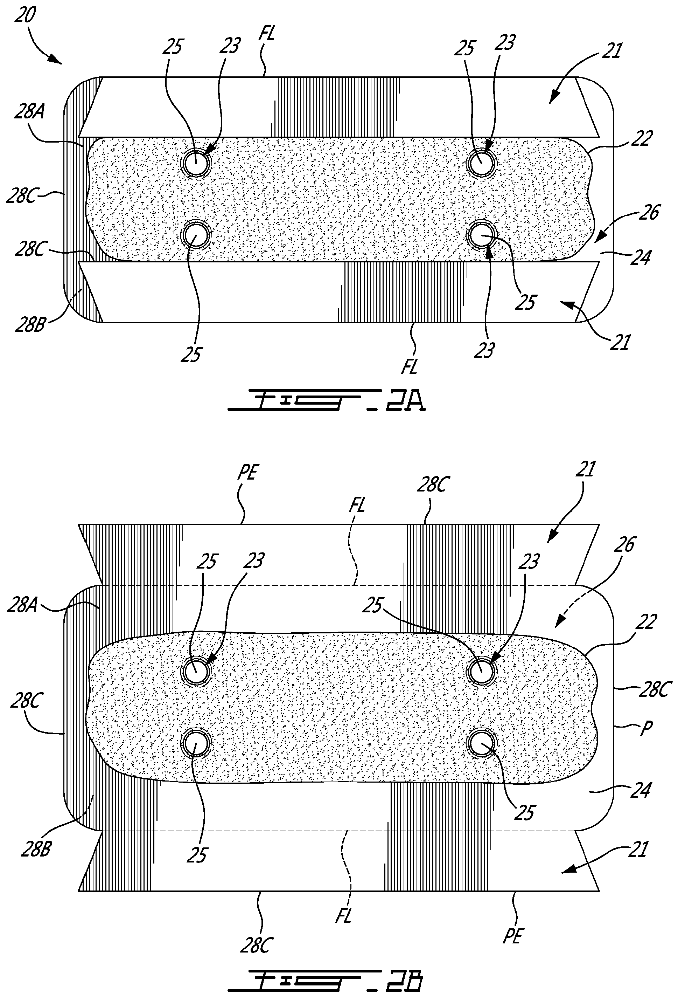

Figs. 2A and 2B show a liquid shim 20. The liquid shim 20 includes a liquid shim material 22 which is flowable to assume the shape of the gap 9A to be filled. The liquid shim material 22 has a viscosity that allows for it to flow under pressure to fill the gap 9A. The liquid shim material 22 is considered "liquid" because of its ability to flow or be displaced in conditions where it is positioned in the gap 9A. The viscosity of the liquid shim material 22 is high enough so that after it has been deformed under pressure, it remains deformed. The liquid shim material 22 is also curable to form a solid object, such as the solid shim 10 described above. Once cured, the liquid shim material 22 is no longer "liquid" or flowable, and remains in the shape it forms when it cured. The liquid shim material 22 may cure under any suitable conditions depending on the liquid shim material 22 being used. For example, the liquid shim material 22 may cure upon being exposed to room/ambient temperatures for a duration of time, or by being heated. For example, the liquid shim material 22 may have liquid-like properties (i.e. is flowable) at cold temperatures, and may cure at room temperature to solidify into the solid shim 10. The liquid shim material 22 may provide electrical or thermal insulation properties when cured into the solid shim 10. Examples of the liquid shim material 22 include, but are not limited to, Henkel EA9377, EA 9394, and 3M EC7272 Magabond 6389.

The liquid shim 20 has a bag 24 which contains the liquid shim material 22. The bag 24 is a body which is impermeable to the liquid shim material 22 in order to contain the liquid shim material 22, and to isolate it from the environment surrounding the bag 24. The bag 24 is non-porous. The bag 24 is transparent to see the liquid shim material 22 therein. The bag 24 may be made from any suitable material to accomplish such functionality. For example, the bag 24 may be made from suitable polymeric materials.

The bag 24 defines an inner volume 26. The liquid shim material 22 is disposed in the inner volume 26 of the bag 24. As described in more detail below, the liquid shim material 22 is added to the inner volume 26 of the bag 24. The liquid shim material 22, before being cured, is free to flow through the inner volume 26 to assume the shape of the gap 9A to be filled. After receiving the liquid shim material 22, the bag 24 forms a closed body that is sealed. The inner volume 26 then becomes a closed volume. The liquid shim material 22 is thus sealed from the environment outside the bag 24 by the closed body of the bag 24. Air, fluids, and solids from outside of the bag 24 are thus prevented from entering the inner volume 26 and contaminating the liquid shim material 22. In Figs. 2A and 2B, the pressure within the bag 24, and thus of the inner volume 26, is approximately zero. A substantial vacuum is present within the bag 24, which may allow the liquid shim material 22 to be displaced unhindered within the inner volume 26.

The liquid shim material 22 has a volume that is less than the closed inner volume 26 of the bag 24. The liquid shim material 22 occupies less than an entirety of the closed inner volume 26 of the bag 24. The smaller volume of the liquid shim material 22 allows the liquid shim material 22 to flow through the bag 24, and to change shape to fill the gap 9A when the bag 24 is compressed, as explained in greater detail below. In some embodiments, the volume of the liquid shim material 22 is only slightly less than the inner volume 26.

In Figs. 2A and 2B, the bag 24 has a rectangular shape. The bag has a first wall 28A, a second wall 28B spaced apart from the first wall 28A across the inner volume 26, and side edges 28C that join the first and second walls 28A, 28B. The side edges 28C are peripheral edges of the bag 24 in Figs. 2A and 2B. The side edges 28C define a periphery P of the bag 24 in Figs. 2A and 2B. In an alternate embodiment, the side edges 28C are part of side walls of the bag 24 which extending between the first and second walls 28A, 28B. The joined first wall 28A, the second wall 28B, and the side edges 28C delimit the closed inner volume 26 of the bag 24. Other shapes for the bag 24 are possible. For example, in an alternate embodiment, the bag 24 is cylindrical. For example, in another alternate embodiment, the bag 24 is spherical.

Referring to Figs. 2A and 2B, the bag 24 includes one or more peripheral portions 21 that define a peripheral edge PE of the bag 24. Each peripheral portion 21 is a segment of the bag 24 that is hollow to receive therein the liquid shim material 22, and which is closed off to the surrounding environment. The peripheral portion 21 is closeable to temporarily reduce the inner volume 26 of the bag 24 through which the liquid shim material 22 may flow, and is expandable to increase a volume of the peripheral portion 21 and thereby increase, or restore, the inner volume 26 of the bag 24. Temporary closing off portions of the inner volume 26, as shown in Fig. 2A, allows for reducing the inner volume 26 when there is less need for the liquid shim material 22 to flow through the bag 24, while expanding the peripheral portions 21, as shown in Fig. 2B, allows for restoring the full inner volume 26 of the bag 24 at a later time to provide more space into which the liquid shim material 22 may displace when the liquid shim 20 is placed into the gap 9A.

The expansion of the peripheral portions 21 may take different forms. For example, and as shown in Figs. 2A and 2B, the peripheral portions 21 are folded about a fold line FL that is spaced inwardly from the peripheral edge PE. The fold line FL may be pre-formed with the bag 24 or created when the peripheral portion 21 is folded. When the peripheral portions 21 are folded about the fold line FL, the fold line FL forms a temporary peripheral edge of the bag 24, as shown in Fig. 2A. As shown in Fig. 2B, each peripheral portion 21 extends inwardly into the bag 24 from one of the side edges 28C of the bag 24. The side edges 28C define some of the peripheral edges PE of the bag 24. Each peripheral portion 21 extends between one of the side edges 28C and its fold line FL. The fold line FL is parallel to the side edge 28C.

When the peripheral portions 21 are folded about the fold line FL, as shown in Fig. 2A, the inner volume 26 is reduced. The peripheral portion 21 in its folded position is temporarily attached to one of the first and second walls 28A, 28B such as with tape, and unattached therefrom when it is desirable to expand the peripheral portion 21 and restore the inner volume 26. The inner volume 26 in Fig. 2A is thus reduced to a first value when the peripheral portions 21 are closed or folded about the fold line FL, and the inner volume 26 has second value in Fig. 2B greater than the first value when one or more the peripheral portions 21 is expanded or unfolded about the fold line FL. In an embodiment, the liquid shim 20 is initially provided for use in filling the gap 9A with the peripheral portions 21 folded or "pinched". Once placed in the gap 9A, the peripheral portions 21 are then unfolded about the fold line FL to restore the inner volume 26 and permit the liquid shim material 22 to flow through the entire inner volume 26 if needed.

Other techniques for expanding the peripheral portions 21 are also possible. In an alternate embodiment, the peripheral portion 21 is defined by portions of the first and second walls 28A, 28B that are temporarily stuck together, and which are separable from each other to restore the inner volume 26. In another alternate embodiment, the bag 24 has a temporary seal, in place of the fold line FL, which separates the liquid shim material 22 from the peripheral portions 21. In such an embodiment, the seal may be broken to allow for expansion of the peripheral portions 21 and for the liquid shim material 22 to flow therein.

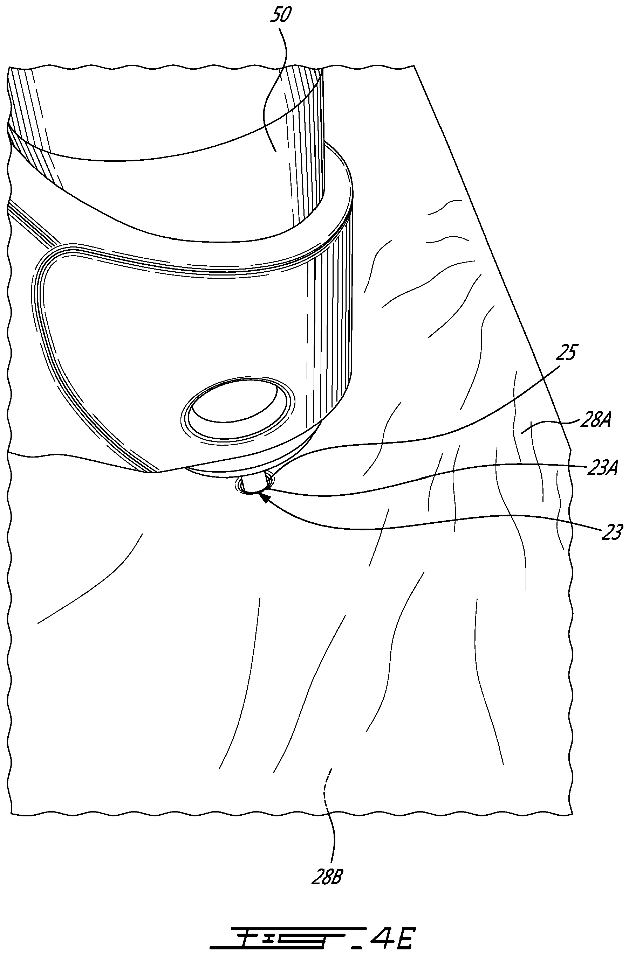

Referring to Figs. 2A and 2B, the bag 24 has one or more sealed openings 23. The sealed openings 23 are voids that extend through the bag 24, and thus define holes 25 or channels extending through the bag 24. The holes 25 receive locating fasteners that are used to mount the bag 24 to the components that need to be shimmed, as described in greater detail below. The sealed openings 23 are all spaced inwardly from the periphery P or peripheral edge PE of the bag 24. The sealed openings 23 are disposed along the body of the bag 24 and not along its periphery P. They are "sealed" because the sealed openings 23 are closed off from a remainder of the interior of bag 24. The sealed openings 23 are not in fluid communication with the inner volume 26 or with the liquid shim material 22 therein. Each of the sealed openings 23 defines a closed seal separating the corresponding hole 25 from the inner volume 26 of the bag 24. Each of the sealed openings 23 is defined by an edge with a closed periphery or boundary that is spaced inwardly from the periphery P of the bag 24. The holes 25 cannot communicate with the interior of the bag 24 and vice versa. Therefore, when the liquid shim material 22 flows through the inner volume 26, it will flow around the sealed openings 23 and their holes 25. Any suitable technique may be used to form the sealed openings 23. In an embodiment, and referring to Fig. 4E, the sealed openings 23 are formed using a heat sealing tool 50 applied against the first and second walls 28A, 28B of the bag 24. This causes the first and second walls 28A, 28B to fuse together and form a seal or edge delimiting the hole 25. The holes 25 are thus defined through, and by, the interconnected first and second walls 28A, 28B. The one or more of the sealed openings 23 may thus have a heat seal 23A. Another possible technique includes forming channels with the sealed openings 23 which extend along their own axes and have impermeable channel walls extending between the first and second walls 28A, 28B.

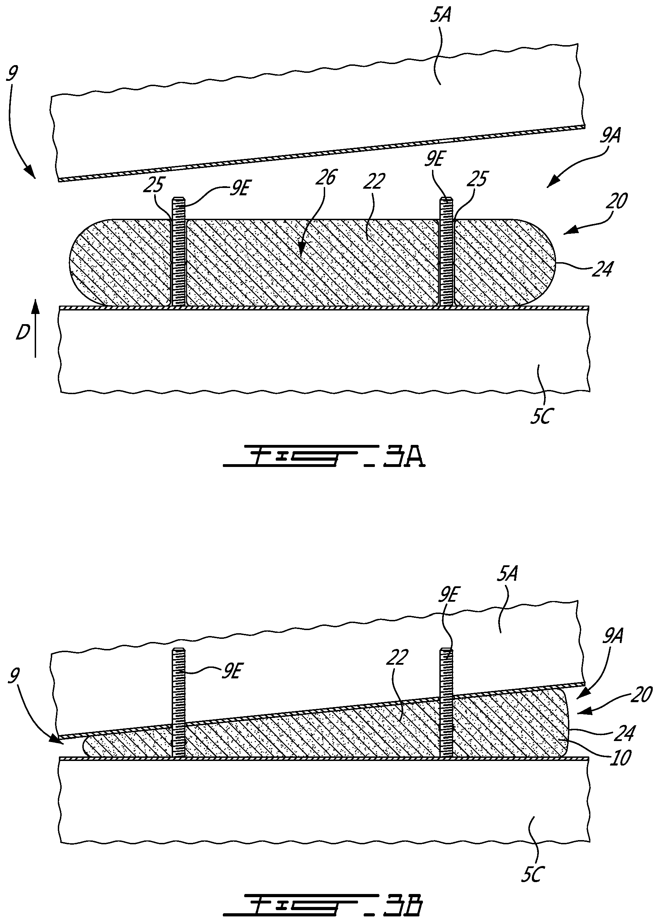

There is disclosed a method of shimming the gap 9A between components. Referring to Figs. 3A and 3B, the gap 9A is defined as part of the joint 9 between the front wing spar 5A and the wing skin 5C. The method thus relates to using the liquid shim 20 to fill gaps 9A between adjacent parts within the aircraft 1. The method may also be used to shim the gap formed between other components, and between components of other types of vehicles.

The method includes positioning the sealed bag 24 containing the liquid shim material 22 in the gap 9A, as shown in Fig. 3A. In Fig. 3A, this includes placing the holes 25 sealed from the inner volume 26 of the bag 24 over fasteners 9E attached to one more of the components. The liquid shim 20 is placed into the gap 9A by mounting the bag 24 by its holes 25 onto the fasteners 9E of the wing skin 5C, for example. Once the liquid shim 20 has been positioned in the gap 9A and its holes 25 aligned with the temporary fasteners 9E, the bag 24 may be taped to adjacent structure to prevent it from displacing. The fasteners 9E may be temporary and used only to position the liquid shim 20. The function of the temporary fasteners 9E is to "tack" the mating components together to enable a first fit of the components. The location and positioning of the holes 25 in the bag 24 are predetermined and correspond to predrilled areas on the components. The holes 25 are located in line with predrilled and temporary assembly holes in the components. The holes 25 are also used to ensure that the solid shim 10 is correctly located in position during final drilling and fastening. Alternatively, the fasteners 9E may be the same fasteners used to permanently attached the front wing spar 5A to the wing skin 5C.

In an alternate embodiment, the sealed bag 24 is positioned in the gap 9A without using the fasteners 9E. In such an embodiment, the liquid shim 20 is positioned into the gap 9A by placing it on a component and using gravity to hold it in place, or temporarily taping it in place. For example, the sealed bag 24 containing the liquid shim material 22 may be placed between two mating surfaces with no hole in the liquid shim 20, and tape may be used to stop the bag 24 from slipping out of the joint 9 if, for example, the joint 9 is vertical. The liquid shim 20 will become solid and the joint 9 may, or may not, be drilled. In the case of a drilled joint, the solid shim 10 may be relocated after trimming using the drilled holes. For a non-drilled joint, the solid shim 10 may be relocated using the footprint of the liquid shim 20.

Before positioning the sealed bag 24, it may be desirable or necessary to remove the liquid shim 20 from a storage unit. In an embodiment, the liquid shim 20 is removed from a cold-storage unit, such as a freezer, before being positioned in the gap 9A.

Referring to Figs. 3A and 3B, the method includes displacing the components towards one another. The components may all displace toward each other to close the gap 9A, or only one of the components may displace toward the other component(s) (i.e. a relative displacement) to close the gap 9A. In Fig. 3A, only the wing skin 5C is displaced in direction D toward the front wing spar 5A. The components displace and contact the bag 24 to squeeze the bag 24. This applies pressure to the bag 24. The pressure applied to the closed bag 24 compresses the bag 24 and its contents (i.e. the liquid shim material 22), to thereby cause the liquid shim material 22 to displace and substantially fill the gap 9A, as shown in Fig. 3B. The components may then be temporarily assembled using the fasteners 9E so that the pressure is maintained and the liquid shim material 22 is squeezed to fill out the inner volume 26, and thereby assume the shape of the gap 9A to have the same thickness as the gap 9A throughout the extent of the gap 9A. In the depicted embodiment, the components are moved towards each other along the fasteners 9E. In an alternate embodiment, another device, such as an expandable bladder, is used to close the gap 9A and compress the bag 24, which may be secured in place using any suitable technique.

Before positioning the liquid shim 20 in the gap 9A, while it is in the gap 9A, while the components are being displaced, or after the components have been displaced, the inner volume 26 may be increased (or restored, depending on the configuration of the bag 24 in the gap 9A). As described above, increasing or restoring the inner volume 26 may be done by expanding one or more of the peripheral portions 21 of the bag 24. Before or during the removal of the liquid shim 20 from the cold-storage unit, the peripheral portions 21 may be expanded. When the liquid shim 20 is in the gap 9A and being compressed by the components, portions of the bag 24 may be further compressed to additionally compress the liquid shim material 22 and fill the gap 9A. It may occur that the liquid shim material 22 has not filled up all of the gap 9A, or has not filled up all of the gap 9A to the desired thickness. In such a situation, a portion of the bag 24 nearest the unfilled part of the gap 9A, such as one of the peripheral portions 21, may be squeezed to cause more liquid shim material 22 to flow into the unfilled part of the gap 9A. The portion of the bag 24 may be squeezed by hand, with a clamp, clip, or using any other suitable technique or tool. The bag 24 may therefore be used to apply pressure back inside the bag 24 after the liquid shim 20 has already been assembled in the joint 9, to help ensure that any sagging/wrinkles in the bag 24 are removed. The bag 24 and/or its peripheral portions 21 allow for re-pressurizing parts of the bag 24.

Referring to Figs. 3A and 3B, the method includes curing the squeezed or compressed liquid shim material 22 while it is still within the sealed bag 24 in order to become the solid shim 10, which fills the gap 9A. The solid shim 10 is thus formed within the bag 24. The liquid shim material 22 may be cured or solidified using any suitable techniques. For example, in the depicted embodiment, the liquid shim material 22 cures when exposed, for a given period of time, to the room or ambient temperature of the environment around the joint 9. Another possible technique for curing the liquid shim material 22 in the gap 9A includes preheating the liquid shim material 22 before placing it in the gap 9A to accelerate the curing process. This involves heating the liquid shim material 22 while it is still in the bag 24. Yet another possible technique for curing the liquid shim material 22 includes applying localized heat to the compressed liquid shim material 22 while it is in the gap 9A and being compressed. This involves heating the liquid shim material 22 while it is still in the bag 24. Heating the liquid shim material 22 may accelerate the time it takes for it to cure and form the solid shim 10. For example, every 10ºC increase in the cure temperature may decrease the time needed for curing by half.

It will be appreciated that one or more of these techniques may be performed at the same time. For example, in an embodiment, the liquid shim material 22 is left to cure by being exposed, for a short setting time, to the room or ambient temperature of the environment around the joint 9A. After the short setting time ends, heat is applied to accelerate and achieve full cure. Full cure in this instance is a state where the shim 10 is solid enough such that fastener compression forces may be applied.

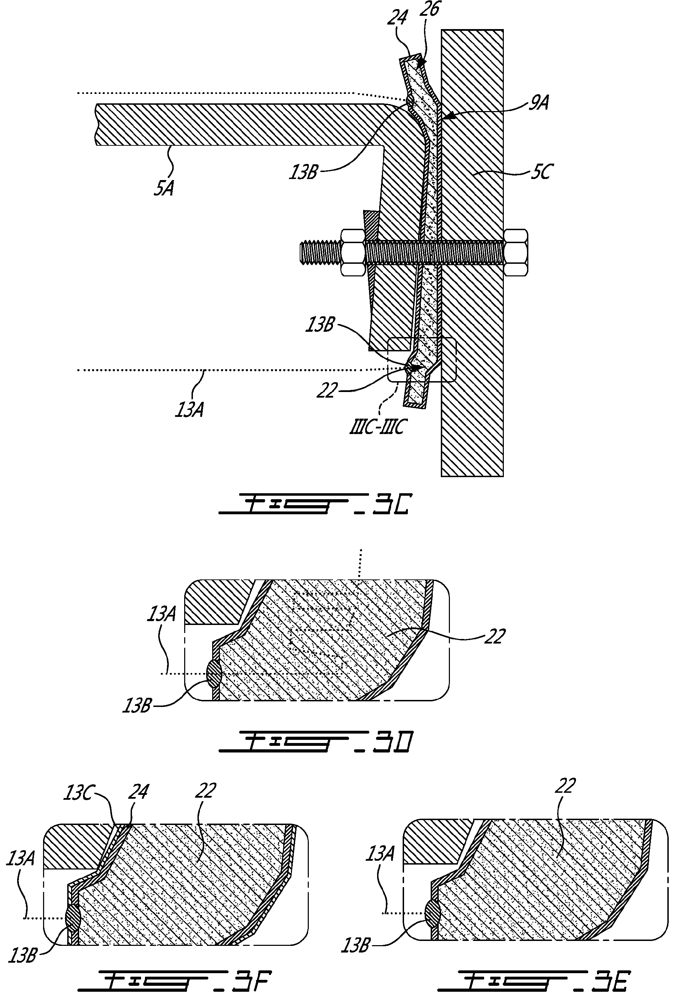

Figs. 3C to 3F show possible techniques for heating the liquid shim material 22 while it is in the gap 9A. Fig. 3C shows the bag 24 containing the liquid shim material 22 in the gap 9A between the front wing spar 5A and the wing skin 5C. An electric wire 13A runs through the inner volume 26 of the bag 24 and through the liquid shim material 22. The electric wire 13A is thus embedded in the bag 24 and the liquid shim material 22. Seals 13B are applied as needed where the electric wire 13A pierces the bag 24. Referring to Fig. 3D, the liquid shim material 22 may generate resistance when exposed to an electrical current, such that current passing through the electric wire 13A causes the liquid shim material 22 to heat up. Referring to Fig. 3E, the liquid shim material 22 may include conductive materials, such as conductive nano-materials, carbon nanotubes, and conductive microplates, such that current passing through the electric wire 13A causes the liquid shim material 22 to heat up. Referring to Fig. 3F, a metal 13C in liquid or powder form may be sprayed or otherwise applied to the surface of the bag 24 to provide electrical conductivity. A thin film may be coated over the metal 13C to provide insulation. A current passing through the electric wire 13A may excite the metal 13C and cause the liquid shim material 22 to heat up. It will be appreciated that one or more of these techniques may be used at the same time. Other techniques may also be used to heat the liquid shim material 22 while it is in the gap 9A. For example, a hot air blower may apply convection heating to the bag 24. In another example, an infra-red lamp may be used to apply infra-red heating to the bag 24.

In the embodiment where the liquid shim 20 is mounted on the locating fasteners 9E, as shown in Figs. 3A and 3B, the liquid shim 20 may be cured while positioned on the fasteners 9E. The bag 24 containing the cured, solid shim 10 may then be removed off the fasteners 9E. This allows for further processing to be done to the solid shim 10 away from the joint 9. For example, the bag 24 may be removed from the solid shim 10, and the solid shim 10 may be trimmed as needed. The solid shim 10, now without the bag 24, may then be placed back into the gap 9A and located in the desired position using the same locating fasteners 9E. The solid shim 10 has holes extending through the solid shim 10 which correspond to the location of the holes 25 in the bag 24. The holes in the solid shim 10 are formed while curing the liquid shim material 22, which was disposed around the fasteners 9E. The components (e.g. the wing skin 5C and the front wing spar 5A) may then be permanently assembled around the solid shim 10. The thickness and/or density of the solid shim 10 may then be measured or tested.

In an alternate embodiment, the cured, solid shim 10 is processed while still within the gap 9A of the joint 9. The bag 24 is therefore removed from the solid shim 10 while it is in the gap 9A, whether or not the solid shim 10 is mounted about the fasteners 9E. The solid shim 10 may also be trimmed or shaved while in the gap 9A. After the desired processing has been performed, the cured, solid and prepared shim 10 is all that is left in the gap 9A. The thickness and/or density of the solid shim 10 may then be measured or tested. The components (e.g. the wing skin 5C and the front wing spar 5A) may then be permanently assembled around the solid shim 10.

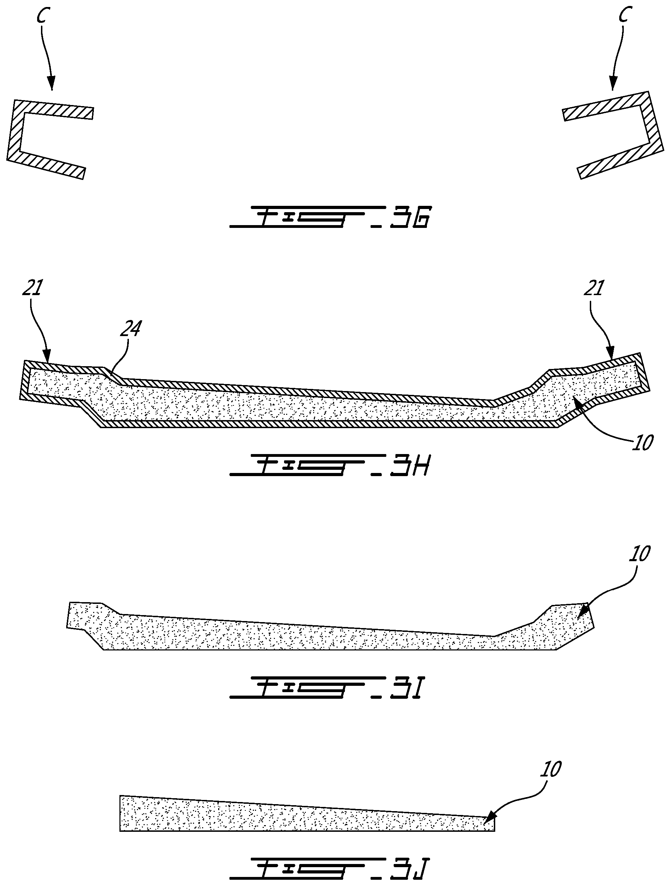

Irrespective of whether the solid shim 10 is processed within the gap 9A or away from the gap 9A, an interfay sealant may be applied to the solid shim 10 to compensate for the thickness of the bag 24 that has been removed, so that the solid shim 10 alone has substantially the same thickness as the solid shim 10 and the bag 24 did when positioned in the gap 9A. Figs. 3G to 3J show one possible technique for trimming or fitting the solid shim 10. Referring to Fig. 3G, clamps C are removed from the peripheral portions 21, for example. Referring to Fig. 3H, the freshly-set solid shim 10 is removed from the gap 9A, and then the bag 24 is removed as shown in Fig. 3I. The solid shim 10 is then trimmed to its desired shape, as shown in Fig. 3J. If desired or necessary, the solid shim 10 may be baked in an oven to further cure, for example at 40ºC.

The components may be displaced away from each other to increase the size of the gap 9A, and facilitate either the removal of the solid shim 10 from the gap 9A or the processing of the solid shim 10 within the gap 9A. For example, after curing the liquid shim material 22 to form the solid shim 10, the wing skin 5C may be removed. In another example, actuators may be used to displace the wing skin 5C in a direction opposite to the direction D a distance away from the front wing spar 5A. The components may all displace away from each other to increase the size of the gap 9A, or only one of the components may displace away from the other component(s) (i.e. a relative displacement) to increase the size of the gap 9A.

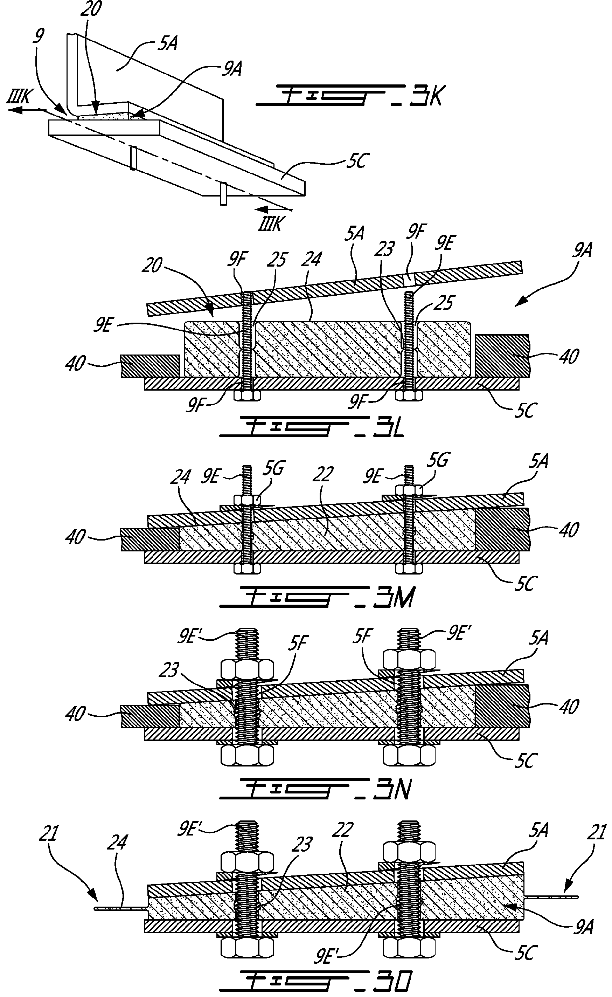

One possible sequence for mounting and curing the sealed bag 24 onto the fasteners 9E is shown in Figs. 3K to 3O. Fig. 3K shows the joint 9 between the wing skin 5C and the front wing spar 5A, and the gap 9A defined between these two components. The gap 9A in the depicted embodiment is tapered, such that its height varies along the gap 9A. Referring to Fig. 3L, the liquid shim 20 is placed into the gap 9A by mounting the bag 24 by its holes 25 onto the temporary fasteners 9E extending through holes 5F in both the wing skin 5C and the front wing spar 5A. Movement limiters 40 are mounted on either side of the bag 24 to constrain expansion of the liquid shim 20 and keep it confined to the gap 9A. The movement limiter 40 may be, for example, a solid shim 10 or another liquid shim 20. The diameter of the temporary fasteners 9E is smaller than the diameter of the holes 5F in the wing skin 5C and the front wing spar 5A. The temporary fasteners 9E are thus "undersized", and used in this example only for positioning the liquid shim 20 in the gap 9A. Referring to Fig. 3M, the front wing spar 5A is brought closer to the wing skin 5C by rotating a nut 5G mounted about the fasteners 9E to drive the front wing spar 5A toward the wing skin 5C. During or prior to this movement, the peripheral portions 21 of the bag 24 may be expanded or opened to allow the liquid shim material 22 to flow therein. Referring to Fig. 3N, the temporary fasteners 9E are replaced with full-sized fasteners 9E' which have a larger diameter. The diameters of the full-sized fasteners 9E' is similar or equal to the diameter of the holes 5F in the wing skin 5C and the front wing spar 5A. Referring to Fig. 3O, the movement limiters 40 are removed from either side of the bag 24, and liquid shim material 22 is allowed to fully expand in the bag 24 to fill the gap 9A. The liquid shim material 22 is then cured to form the solid shim 10. If the full-sized fasteners 9E' are not the final fasteners used in the final assembly of the front wing spar 5A toward the wing skin 5C, the holes 5F may be enlarged to receive final fasteners. Such enlarged holes may have a diameter larger than that of the sealed openings 23.

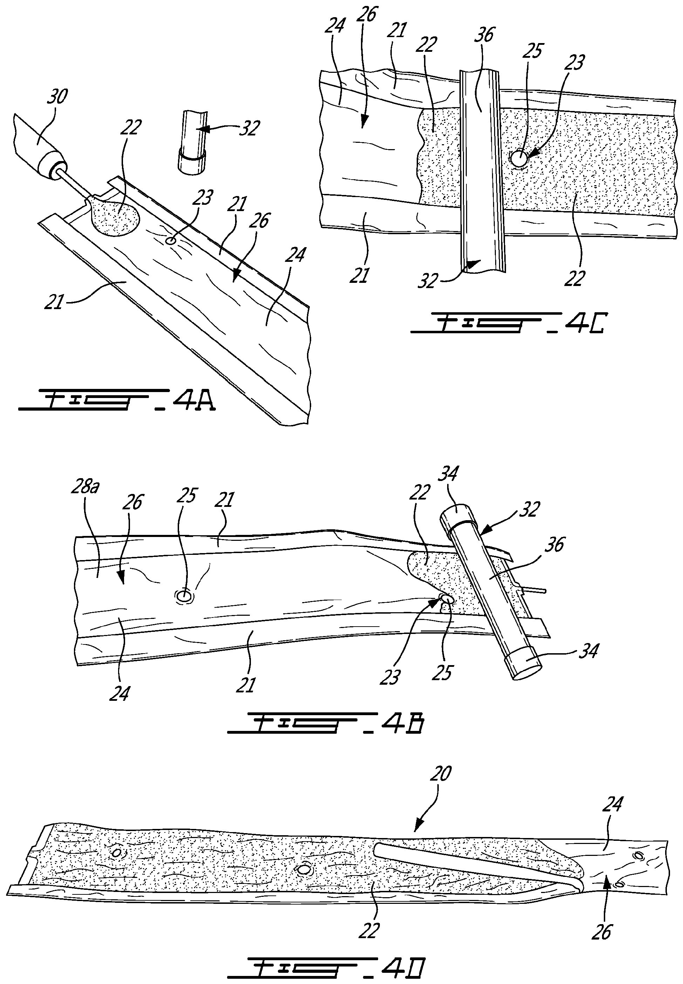

There is disclosed a method of creating the liquid shim 20. Referring to Figs. 4A to 4E, the method includes providing the liquid shim material 22 into the sealed bag 24. The liquid shim material 22 flows through the inner volume 26 and is curable to form the solid shim 10. The liquid shim material 22 has a volume that is less than the inner volume 26. Before providing the liquid shim material 22 to the bag 24, the sealed openings 23 and the through-holes 25 defined thereby may be provided by heat sealing the holes 25, such as by using the heat sealing tool 50 in Fig. 4E. The heat sealing tool 50 may be a heat press or punch that fuses the first and second walls 28A, 28B of the bag 24 together. The bag 24 may be formed using any suitable technique. For example, the first and second walls 28A, 28B may be fused together along their edges or along overlapping portions. In another example, the first and second walls 28A, 28B are taped together.

The liquid shim material 22 may be provided into the sealed bag 24 while reducing or eliminating a pressure of the inner volume 26. The liquid shim material 22 may thus be provided while the bag 24 is under vacuum. A vacuum chamber may be setup to infuse the liquid shim material 22 into the bag 24. The bag 24 may be filled within the liquid shim material 22 while it is within a vacuum chamber and while vacuum is applied to the inner volume 26. Filling the bag 24 with the liquid shim material 22 in this manner may reduce or eliminate the risk of air being present in the bag 24, which might hinder the flow of the liquid shim material 22 through the inner volume 26. With little or no pressure within the bag 24, the liquid shim material 22 may flow easier through the inner volume 26.

Irrespective of whether the bag 24 is under vacuum or not, the liquid shim material 22 may be provided by injecting the liquid shim material 22 into the sealed bag 24, as shown in Fig. 4A. In Fig. 4A, the bag 24 has a rectangular shape, and the liquid shim material 22 is injected with an injector 30 at one end of the bag 24. The bag 24 in Fig. 4A is sealed and has an exhaust to allow air to exit the bag 24 as the inner volume 26 is being filled with the liquid shim material 22. Once the bag 24 is filled with the liquid shim material 22 to the desired thickness, the exhaust is closed or sealed, and the bag 24 remains closed.

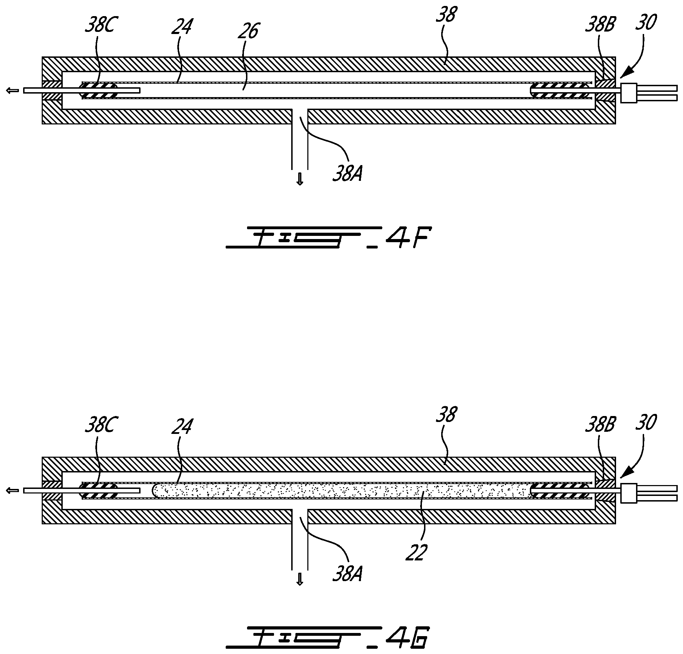

An example of a technique for filling the bag 24 under vacuum is shown in Figs. 4F and 4G. The empty bag 24 is placed inside a vacuum chamber 38 which has an opening 38A through which air is drawn out of the vacuum chamber 38 to create a vacuum therein. The injector 30 is inserted through another opening in the vacuum chamber 38 and the opening is closed with a seal 38B. An exit nozzle 38C is mounted to an end of the bag 24 opposite to the injector 30. Air is drawn out of the bag 24 via the exit nozzle 38C to create a vacuum in the bag 24. Referring to Fig. 4G, during or after the vacuum is created in the bag 24 and the vacuum chamber 38, the liquid shim material 22 is injected with the injector 30 into the inner volume 26 of the bag 24. The liquid shim material 22 is thus provided to the bag 24 while or after reducing the pressure of the volume of air in the vacuum chamber 38 around the bag 24. With little or no pressure within the bag 24 and around the bag 24 inside the vacuum chamber 38, the liquid shim material 22 is able to flow through the inner volume 26 without restriction.

If it is desired to distribute the liquid shim material 22 within the inner volume 26 so that the liquid shim material 22 has a uniform thickness, the liquid shim material may be spread through the inner volume 26. Referring to Figs. 4B and 4C, a spreader 32 is used to apply pressure to one of the first and second walls 28A, 28B of the bag 24 to spread the liquid shim material 22 through the bag 24. The spreader 32 has rollers 34 at its ends and a pin 36 extending between the rollers 34. The rollers 34 have a diameter greater than the diameter of the pin 36. When the spreader 32 is used on a flat surface, the rollers 34 space the pin 36 a desired distance from the flat surface. The desired distance becomes the thickness of the liquid shim material 22 within the bag 24 when the pin 36 is applied to the bag 24, as shown in Fig. 4C. As it is spread through the bag 24, the liquid shim material 22 flows around the sealed openings 23 and the holes 25, as shown in Figs. 4B and 4C. Other devices may be used to spread the liquid shim material 22.

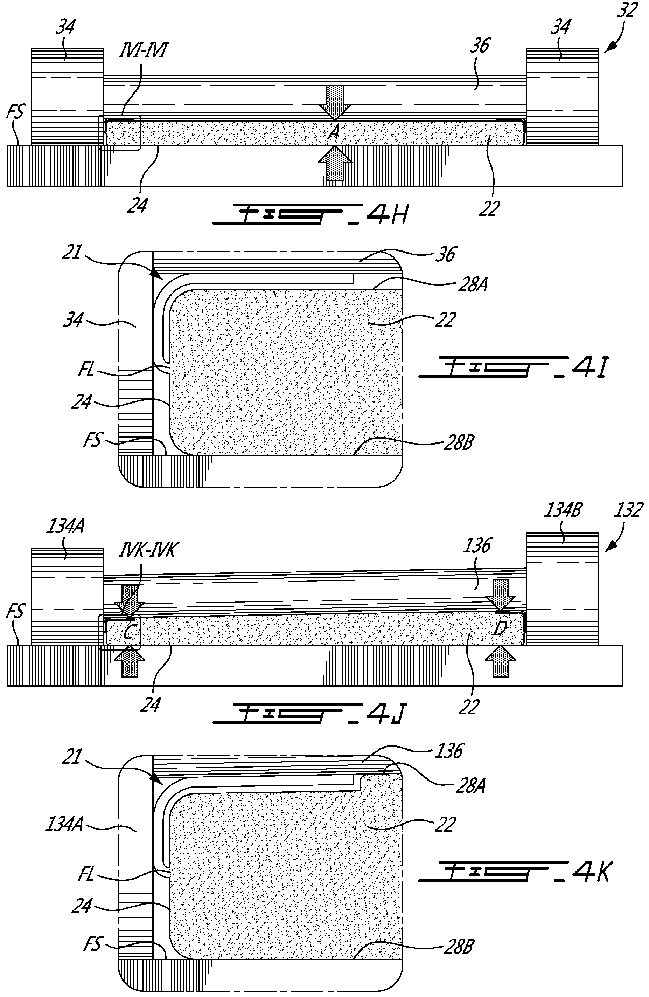

The spreader 32 is shown in Figs. 4H and 4I. The spreader 32 in Figs. 4H and 4I is used to spread the liquid shim material 22 so that it has a substantially constant or same height A within the bag 24. The rollers 34 have a diameter greater than the diameter of the pin 36. When the spreader 32 is used on a flat surface FS, the rollers 34 space the pin 36 a desired distance from the flat surface FS. The desired distance becomes the uniform thickness or height A of the liquid shim material 22 within the bag 24 when the pin 36 is applied to the bag 24, as shown in Fig. 4H. The height A is equal to half the difference between the diameter of the rollers 34 and the diameter of the pin 36. Referring to Fig. 4I, the peripheral portions 21 of the bag 24 are temporarily folded about the FL when the spreader 32 is applied against the first or second wall 28A, 28B of the bag 24. The peripheral portions 21 in Fig. 4I are not filled with, or are free of, the liquid shim material 22 as it is being spread in the bag 24.

Another example of the spreader 132 is shown in Figs. 4J and 4K. The spreader 132 in Figs. 4J and 4K is used to spread the liquid shim material 22 so that it has a varying or tapered height within the bag 24. Referring to Fig. 4J, the height C of the bag 24 along one of its sides is less than the height D of the bag 24 along its other side. The rollers 134 include a first roller 134A having a first diameter, and a second roller 134B having a second diameter greater than the first diameter. The diameters of both the first and second rollers 134A, 134B are greater than the diameter of the pin 136. When the spreader 132 is used on the flat surface FS, the first and second rollers 134A, 134B space the pin 136 a desired distance from the flat surface FS. The desired distance becomes the varying or tapered thickness or height of the liquid shim material 22 within the bag 24 when the pin 136 is applied to the bag 24, as shown in Fig. 4J. The pin 136 has a longitudinal axis that is transverse to the flat surface FS. The height C is equal to half the difference between the first diameter of the first roller 134A and the diameter of the pin 136, and the larger height D is equal to half the difference between the second diameter of the second roller 134B and the diameter of the pin 136. Referring to Fig. 4K, the peripheral portions 21 of the bag 24 are temporarily folded about the FL when the spreader 132 is applied against the first or second wall 28A, 28B of the bag 24. The peripheral portions 21 in Fig. 4K are not filled with, or are free of, the liquid shim material 22 as it is being spread in the bag 24.

The spreading of the liquid shim material 22 with the spreader 32,132 may push air out of the inner volume 26. To assist with the spreading of the liquid shim material 22 with the spreader 32,132, the inner volume 26 may be under vacuum, and/or the bag 24 may be placed in the vacuum chamber 38.

After providing the bag 24 with the liquid shim material 22, the liquid shim 20 is prepared and ready to use. Fig. 4D shows an example of a prepared liquid shim 20. The prepared liquid shim 20 may be stored in a cold-storage unit, such as a freezer or refrigerator. Depending on the type of liquid shim material 22 used, this may preserve or extend the lifespan of the liquid shim 20 by slowing or preventing curing of the liquid shim material 22 within the bag 24. For some types of liquid shim material 22, curing may begin the moment the liquid shim material 22 is mixed. Refrigerating or freezing these liquid shim materials 22 slows down curing and can extend the lifespan of the liquid shim 20. Many prepared liquid shims 20 may be stored in the cold-storage unit in this manner and used when needed. It may therefore be possible to prepare multiple liquid shims 20 that can be used as and when required, which helps to minimise setup times. In one possible storage configuration of the cold-storage unit, a freezer kept at - 18°C is used, and retards the curing process of the liquid shim material 22 such that the working life of the liquid shim 20 may be extended by an additional five days. It may be possible to further increase the working life of the liquid shim 20 by decreasing the temperature of the cold-storage unit to -80°C.

Before placing the liquid shim 20 in the gap 9A, a portion of the liquid shim 20, such as one or more of the peripheral portions 21, may be closed to temporarily decrease the inner volume 26 of the sealed bag 24. The portions may be closed before the liquid shim material 22 is provided to the bag 24, as shown in Figs. 4A, while spreading the liquid shim material 22 through the inner volume, as shown in Figs. 4H to 4K, or after the liquid shim material 22 has been provided to the bag 24. In Figs. 4A and 4H to 4K, one or more of the peripheral portions 21 of the bag 24 are folded over to prevent the liquid shim material 22 from entering the peripheral portions 21 as the liquid shim material 22 fills the inner volume 26. After the bag 24 has been filled with the liquid shim material 22, and before placing the liquid shim 20 in the gap 9A, or while it is present in the gap 9A and before the components squeeze the bag 24, the peripheral portions 21 may be expanded or opened. This restores the inner volume 26 to its original value. In Figs. 4A to 4C, opening the bag 24 is achieved by removing the tape which keeps the peripheral portions 21 attached to the bag 24.

The methods and liquid shim 20 disclosed herein provide a relatively clean process because the liquid shim material 22 is contained in the bag 24. The liquid shim 20 fills the gap 9A and helps to improve quality because the liquid shim material can assume the shape of the gap 9A almost perfectly. The liquid shim 20 is relatively easy to setup and layup, and easy to store, which helps efficiency by reducing the time taken to measure gaps across the joint 9. The liquid shim 20 may also offer health and safety benefits because the operator handling the liquid shim is less likely to come into contact with the uncured liquid shim material 22.

The above description is meant to be by way of example only, and one skilled in the art will recognize that changes may be made to the embodiments described without departing from the scope of the invention, which is defined by the appended claims. For example, the liquid shim 20 and methods may be used for other types of vehicles, and for joints other than those present in an aircraft 1.

## Claims

1. A liquid shim (20), comprising:
a bag (24) defining a closed inner volume (26) and having sealed openings (23) spaced inwardly from a periphery of the bag (24), the sealed openings (23) being sealed from the closed inner volume (26) and delimiting holes (25) extending through the bag (24); and
a liquid shim material (22) being flowable through the closed inner volume (26) around the sealed openings (23) and being curable to form a solid, the liquid shim material (22) having a liquid shim material volume being less than the closed inner volume (26) of the bag (24).

2. The liquid shim (20) of claim 1, wherein the periphery of the bag (24) includes a peripheral portion (21) defining a peripheral edge of the bag (24), the peripheral portion (21) being temporarily closeable to decrease the closed inner volume (26), and the peripheral portion (21) being expandable, and optionally wherein the peripheral portion (21) is folded about a fold line spaced inwardly from the peripheral edge, the peripheral portion (21) being unfoldable about the fold line to close and expand the peripheral portion (21).

3. The liquid shim (20) of any one of claims 1 or 2, wherein a pressure within the bag (24) is approximately zero, and optionally wherein one or more of the sealed openings (23) has a heat seal (23A).

4. The liquid shim (20) of claim 1, wherein the bag (24) comprises a first wall (28A), a second wall (28B) spaced apart from the first wall (28A), and side edges joining the first and second walls, the first wall (28A), the second wall (28B), and the side edges delimiting the closed inner volume (26) of the bag (24), the sealed openings (23) joining the first and second walls and the holes (25) extending through the first and second walls, and optionally wherein the bag (24) comprises a peripheral portion (21) extending inwardly into the bag (24) from one of the side edges toward a fold line, the peripheral portion (21) being folded about the fold line and temporarily attached to one of the first and second side walls, and further optionally wherein the closed inner volume (26) has a first value upon the peripheral portion (21) being folded about the fold line, and the closed inner volume (26) has a second value greater than the first value upon the peripheral portion (21) being unfolded about the fold line.

5. A method of shimming a gap (9A) between components, the method comprising:
positioning a sealed bag (24) containing a liquid shim material (22) in the gap (9A);
displacing the components towards one another to apply pressure with one or more of the components to the sealed bag (24), to thereby compress the liquid shim material (22) and fill the gap (9A); and
curing, within the sealed bag (24) and within the gap (9A), the compressed liquid shim material (22) to form a solid shim (10).

6. The method of claim 5, wherein positioning the sealed bag (24) includes placing holes (25), sealed from an interior of the sealed bag (24) and extending through the sealed bag (24), over fasteners (9E) of one or more of the components, and optionally further comprising removing the sealed bag (24) off the fasteners (9E) after curing the compressed liquid shim material (22) to form the solid shim (10), and optionally further comprising increasing a volume of an interior of the sealed bag (24) before displacing the components toward one another, and/or wherein increasing the volume of the interior of the sealed bag (24) includes expanding peripheral portions (21) of the sealed bag (24).

7. The method of claim 5, comprising removing the sealed bag (24) from the solid shim (10), and optionally further comprising displacing the components away from each other before removing the sealed bag (24) from the solid shim (10), and/or trimming the solid shim (10) within the gap (9A).

8. The method of claim 7, comprising permanently fastening the components together over the solid shim (10) after removing the sealed bag (24) from the solid shim (10), and optionally further comprising removing the sealed bag (24) from a cold-storage unit before positioning the sealed bag (24) in the gap (9A), and optionally wherein displacing the components towards one another includes compressing portions of the sealed bag (24) to further compress the liquid shim material (22) and fill the gap.

9. The method of any one of claims 5 to 8, wherein curing the compressed liquid shim material (22) includes one or more of exposing the compressed liquid shim material (22) to ambient temperature, and applying localized heat to the compressed liquid shim material (22); or wherein curing the compressed liquid shim material (22) includes exposing the compressed liquid shim material (22) to ambient temperature, and subsequently, applying localized heat to the compressed liquid shim material (22); or wherein curing the compressed liquid shim material (22) includes applying localized heat to the compressed liquid shim material (22) using one or more of convection heating, infra-red heating, and electrical-resistance heating.

10. A method of creating a liquid shim, the method comprising: providing a liquid shim material (22) into a sealed bag (24), the liquid shim material (22) being flowable through an inner volume (26) of the sealed bag (24) and being curable to form a solid, the liquid shim material (22) having a liquid shim material volume being less than the inner volume (26) of the sealed bag (24).

11. The method of claim 10, wherein providing the liquid shim material (22) into the sealed bag (24) includes providing the liquid shim material (22) into the sealed bag (24) while reducing a pressure of the inner volume (26) of the sealed bag, and optionally wherein providing the liquid shim material (22) into the sealed bag (24) includes injecting the liquid shim material (22) into the sealed bag (24).

12. The method of any one of claims 10 or 11, wherein providing the liquid shim material (22) into the sealed bag (24) includes providing the liquid shim material (22) into the sealed bag (24) while reducing a pressure of a volume of air surrounding the sealed bag (24), and/or comprising closing a portion of the sealed bag (24) to decrease the inner volume (26) of the sealed bag (24).

13. The method of claim 12, wherein closing the portion of the sealed bag (24) includes closing the portion of the sealed bag (24) before providing the liquid shim material (22) into the sealed bag (24); and/or further comprising opening the portion of the sealed bag (24) after providing the liquid shim material (22) into the sealed bag (24); and/or wherein providing the liquid shim material (22) into the sealed bag (24) includes spreading the liquid shim material (22) through the inner volume (26) of the sealed bag (24).

14. The method of any one of claims 10 to 13, comprising forming holes (25) sealed from the inner volume (26) and extending through the sealed bag (24) before providing the liquid shim material (22) into the sealed bag (24), wherein forming the holes (25) optionally includes heat sealing the holes (25); and/or wherein the method comprises storing the liquid shim material (22) in a cold-storage unit.

15. A joint (9) between components defining a gap (9A) therebetween, the joint (9) comprising: a sealed bag (24) which comprises a cured shim disposed within the gap (9A) and having a shape substantially similar to a shape of the gap (9A), the cured shim having holes (25) extending therethrough, the joint (9) having fasteners (9E) connecting the components and extending through the holes (25) in the cured shim.

## Patentansprüche

1. Flüssiger Spaltausgleich (20), umfassend:
einen Beutel (24), der ein geschlossenes Innenvolumen (26) definiert und versiegelte Öffnungen (23) aufweist, die von einem Umfang des Beutels (24) nach innen beabstandet sind, wobei die versiegelten Öffnungen (23) gegenüber dem geschlossenen Innenvolumen (26) versiegelt sind und Löcher (25) begrenzen, die sich durch den Beutel (24) erstrecken; und
ein flüssiges Spaltausgleichsmaterial (22), das durch das geschlossene Innenvolumen (26) um die versiegelten Öffnungen (23) strömbar und aushärtbar ist, um einen Feststoff zu bilden, wobei das flüssige Spaltausgleichsmaterial (22) ein Volumen eines flüssigen Spaltausgleichsmaterials aufweist, das kleiner als das geschlossene Innenvolumen (26) des Beutels (24) ist.

2. Flüssiger Spaltausgleich (20) nach Anspruch 1, wobei der Umfang des Beutels (24) einen Umfangsabschnitt (21) beinhaltet, der eine Umfangskante des Beutels (24) definiert, wobei der Umfangsabschnitt (21) vorübergehend schließbar ist, um das geschlossene Innenvolumen (26) zu verringern, und der Umfangsabschnitt (21) aufweitbar ist, und wobei der Umfangsabschnitt (21) optional um eine Faltlinie gefaltet ist, die von der Umfangskante nach innen beabstandet ist, wobei der Umfangsabschnitt (21) um die Faltlinie entfaltbar ist, um den Umfangsabschnitt (21) zu schließen und aufzuweiten.

3. Flüssiger Spaltausgleich (20) nach einem der Ansprüche 1 oder 2, wobei ein Druck innerhalb des Beutels (24) ungefähr null ist und wobei eine oder mehrere der versiegelten Öffnungen (23) optional eine Heißversiegelung (23A) aufweisen.

4. Flüssiger Spaltausgleich (20) nach Anspruch 1, wobei der Beutel (24) eine erste Wand (28A), eine zweite Wand (28B), die von der ersten Wand (28A) beabstandet ist, und Seitenkanten umfasst, welche die erste und zweite Wand gelenkig zusammenfügen, wobei die erste Wand (28A), die zweite Wand (28B) und die Seitenkanten das geschlossene Innenvolumen (26) des Beutels (24) begrenzen, wobei die versiegelten Öffnungen (23) die erste und zweite Wand gelenkig zusammenfügen und sich die Löcher (25) durch die erste und zweite Wand erstrecken, und wobei der Beutel (24) optional einen Umfangsabschnitt (21) umfasst, der sich von einer der Seitenkanten in Richtung einer Faltlinie nach innen in den Beutel (24) erstreckt, wobei der Umfangsabschnitt (21) um die Faltlinie gefaltet und vorübergehend an einer von der ersten und zweiten Seitenwand angebracht ist, und wobei das geschlossene Innenvolumen (26) ferner optional einen ersten Wert aufweist, wenn der Umfangsabschnitt (21) um die Faltlinie gefaltet ist, und das geschlossene Innenvolumen (26) einen zweiten Wert aufweist, der größer als der erste Wert ist, wenn der Umfangsabschnitt (21) um die Faltlinie entfaltet ist.

5. Verfahren zum Spaltausgleichen einer Lücke (9A) zwischen Komponenten, wobei das Verfahren Folgendes umfasst:
Positionieren eines versiegelten Beutels (24), der ein flüssiges Spaltausgleichsmaterial (22) enthält, in der Lücke (9A);
Verschieben der Komponenten aufeinander zu, um Druck mit einer oder mehreren der Komponenten auf den versiegelten Beutel (24) anzuwenden, um dadurch das flüssige Spaltausgleichsmaterial (22) zusammenzudrücken und die Lücke (9A) zu füllen; und
Aushärten des zusammengedrückten flüssigen Spaltausgleichsmaterials (22) innerhalb des versiegelten Beutels (24) und innerhalb der Lücke (9A), um einen festen Spaltausgleich (10) zu bilden.

6. Verfahren nach Anspruch 5, wobei das Positionieren des versiegelten Beutels (24) Platzieren von Löchern (25), die gegenüber einem Innenraum des versiegelten Beutels (24) versiegelt sind und sich durch den versiegelten Beutel (24) erstrecken, über Befestigungselementen (9E) von einer oder mehreren der Komponenten beinhaltet und optional ferner umfassend Entfernen des versiegelten Beutels (24) von den Befestigungselementen (9E) nach dem Aushärten des zusammengedrückten flüssigen Spaltausgleichsmaterials (22), um den festen Spaltausgleich (10) zu bilden, und optional ferner umfassend Vergrößern eines Volumens eines Innenraums des versiegelten Beutels (24), bevor die Komponenten aufeinander zu verschoben werden, und/oder wobei das Vergrößern des Volumens des Innenraums des versiegelten Beutels (24) Aufweiten von Umfangsabschnitten (21) des versiegelten Beutels (24) beinhaltet.

7. Verfahren nach Anspruch 5, umfassend Entfernen des versiegelten Beutels (24) von dem festen Spaltausgleich (10) und optional ferner umfassend Verschieben der Komponenten voneinander weg, bevor der versiegelte Beutel (24) von dem festen Spaltausgleich (10) entfernt wird, und/oder Zuschneiden des festen Spaltausgleichs (10) innerhalb der Lücke (9A).

8. Verfahren nach Anspruch 7, umfassend dauerhaftes Befestigen der Komponenten zusammen über den festen Spaltausgleich (10) nach dem Entfernen des versiegelten Beutels (24) von dem festen Spaltausgleich (10) und optional ferner umfassend Entfernen des versiegelten Beutels (24) aus einer Kühllagereinheit vor dem Positionieren des versiegelten Beutels (24) in der Lücke (9A) und wobei das Verschieben der Komponenten aufeinander zu optional Zusammendrücken von Abschnitten des versiegelten Beutels (24) beinhaltet, um das flüssige Spaltausgleichsmaterial (22) weiter zusammenzudrücken und die Lücke zu füllen.

9. Verfahren nach einem der Ansprüche 5 bis 8, wobei das Aushärten des zusammengedrückten flüssigen Spaltausgleichsmaterials (22) eines oder mehrere von Aussetzen des zusammengedrückten flüssigen Spaltausgleichsmaterials (22) gegenüber Umgebungstemperatur und Anwenden lokaler Wärme auf das zusammengedrückte flüssige Spaltausgleichsmaterial (22) beinhaltet; oder wobei das Aushärten des zusammengedrückten flüssigen Spaltausgleichsmaterials (22) Aussetzen des zusammengedrückten flüssigen Spaltausgleichsmaterials (22) gegenüber Umgebungstemperatur und anschließend Anwenden von lokalisierter Wärme auf das zusammengedrückte flüssige Spaltausgleichsmaterial (22) beinhaltet; oder wobei das Aushärten des zusammengedrückten flüssigen Spaltausgleichsmaterials (22) Anwenden von lokalisierter Wärme auf das zusammengedrückte flüssige Spaltausgleichsmaterial (22) unter Verwendung von einer oder mehreren von Konvektionserwärmung, Infraroterwärmung und elektrischer Widerstandserwärmung beinhaltet.

10. Verfahren zum Herstellen eines flüssigen Spaltausgleichs, wobei das Verfahren Folgendes umfasst: Bereitstellen eines flüssigen Spaltausgleichsmaterials (22) in einen versiegelten Beutel (24), wobei das flüssige Spaltausgleichsmaterial (22) durch ein Innenvolumen (26) des versiegelten Beutels (24) strömbar und aushärtbar ist, um einen Feststoff zu bilden, wobei das flüssige Spaltausgleichsmaterial (22) ein Volumen eines flüssigen Spaltausgleichsmaterials aufweist, das kleiner als das Innenvolumen (26) des versiegelten Beutels (24) ist.

11. Verfahren nach Anspruch 10, wobei das Bereitstellen des flüssigen Spaltausgleichsmaterials (22) in den versiegelten Beutel (24) Bereitstellen des flüssigen Spaltausgleichsmaterials (22) in den versiegelten Beutel (24) beinhaltet, während ein Druck des Innenvolumens (26) des versiegelten Beutels reduziert wird, und wobei das Bereitstellen des flüssigen Spaltausgleichsmaterials (22) in den versiegelten Beutel (24) optional Einspritzen des flüssigen Spaltausgleichsmaterials (22) in den versiegelten Beutel (24) beinhaltet.

12. Verfahren nach einem der Ansprüche 10 oder 11, wobei das Bereitstellen des flüssigen Spaltausgleichsmaterials (22) in den versiegelten Beutel (24) Bereitstellen des flüssigen Spaltausgleichsmaterials (22) in den versiegelten Beutel (24) beinhaltet, während ein Druck eines Luftvolumens, das den versiegelten Beutel (24) umgibt, reduziert wird, und/oder umfassend Schließen eines Abschnitts des versiegelten Beutels (24), um das Innenvolumen (26) des versiegelten Beutels (24) zu verringern.

13. Verfahren nach Anspruch 12, wobei das Verschließen des Abschnitts des versiegelten Beutels (24) Verschließen des Abschnitts des versiegelten Beutels (24) vor dem Bereitstellen des flüssigen Spaltausgleichsmaterials (22) in den versiegelten Beutel (24) beinhaltet; und/oder ferner umfassend Öffnen des Abschnitts des versiegelten Beutels (24) nach dem Bereitstellen des flüssigen Spaltausgleichsmaterials (22) in den versiegelten Beutel (24); und/oder wobei das Bereitstellen des flüssigen Spaltausgleichsmaterials (22) in den versiegelten Beutel (24) Verteilen des flüssigen Spaltausgleichsmaterials (22) durch das Innenvolumen (26) des versiegelten Beutels (24) beinhaltet.

14. Verfahren nach einem der Ansprüche 10 bis 13, umfassend Bilden von Löchern (25), die gegenüber dem Innenvolumen (26) versiegelt sind und sich durch den versiegelten Beutel (24) erstrecken, vor dem Bereitstellen des flüssige Spaltausgleichsmaterials (22) in den versiegelten Beutel (24), wobei das Bilden der Löcher (25) optional Heißversiegeln der Löcher (25) beinhaltet; und/oder wobei das Verfahren Lagern des flüssigen Spaltausgleichsmaterials (22) in einer Kühllagereinheit umfasst.

15. Gelenk (9) zwischen Komponenten, die eine Lücke (9A) dazwischen definieren, wobei das Gelenk (9) Folgendes umfasst: einen abgedichteten Beutel (24), der einen ausgehärteten Spaltausgleich umfasst, der innerhalb der Lücke (9A) angeordnet ist und eine Form aufweist, die im Wesentlichen einer Form der Lücke (9A) ähnlich ist, wobei der ausgehärtete Spaltausgleich Löcher (25) aufweist, die sich dadurch erstrecken, wobei das Gelenk (9) Befestigungselemente (9E) aufweist, welche die Komponenten verbinden und sich durch die Löcher (25) in dem ausgehärteten Spaltausgleich erstrecken.

## Revendications

1. Cale liquide (20), comprenant :
un sac (24) définissant un volume interne fermé (26) et comportant des ouvertures scellées (23) espacées vers l'intérieur à partir d'une périphérie du sac (24), les ouvertures scellées (23) étant scellées à partir du volume interne fermé (26) et délimitant des trous (25) s'étendant à travers le sac (24) ; et
un matériau de cale liquide (22) pouvant s'écouler à travers le volume interne fermé (26) autour des ouvertures scellées (23) et pouvant être durci pour former un solide, le matériau de cale liquide (22) comportant un volume de matériau de cale liquide inférieur au volume interne fermé (26) du sac (24).

2. Cale liquide (20) de la revendication 1, dans laquelle la périphérie du sac (24) comprend une partie périphérique (21) définissant un bord périphérique du sac (24), la partie périphérique (21) pouvant être temporairement fermée pour diminuer le volume interne fermé (26), et la partie périphérique (21) pouvant être dilatée, et éventuellement dans laquelle la partie périphérique (21) est pliée autour d'une ligne de pliage espacée vers l'intérieur à partir du bord périphérique, la partie périphérique (21) pouvant être dépliée autour de la ligne de pliage pour fermer et dilater la partie périphérique (21).

3. Cale liquide (20) de l'une quelconque des revendications 1 ou 2, dans laquelle une pression au sein du sac (24) est approximativement nulle, et éventuellement dans laquelle une ou plusieurs des ouvertures scellées (23) comportent un sceau thermique (23A).

4. Cale liquide (20) de la revendication 1, dans laquelle le sac (24) comprend une première paroi (28A), une seconde paroi (28B) espacée de la première paroi (28A), et des bords latéraux reliant les première et seconde parois, la première paroi (28A), la seconde paroi (28B) et les bords latéraux délimitant le volume interne fermé (26) du sac (24), les ouvertures scellées (23) reliant les première et seconde parois et les trous (25) s'étendant à travers les première et seconde parois, et éventuellement dans lequel le sac (24) comprend une partie périphérique (21) s'étendant vers l'intérieur dans le sac (24) à partir de l'un des bords latéraux vers une ligne de pliage, la partie périphérique (21) étant pliée autour de la ligne de pliage et temporairement fixée à l'une des première et seconde parois latérales, et en outre éventuellement dans lequel le volume interne fermé (26) comporte une première valeur lorsque la partie périphérique (21) est pliée autour de la ligne de pliage, et le volume interne fermé (26) comporte une seconde valeur supérieure à la première valeur lorsque la partie périphérique (21) est en cours de dépliage autour de la ligne de pliage.

5. Procédé de calage d'un espace (9A) entre des composants, le procédé comprenant :
le positionnement d'un sac scellé (24) contenant un matériau de cale liquide (22) dans l'espace (9A) ;
le déplacement des composants l'un vers l'autre pour appliquer une pression avec un ou plusieurs des composants au sac scellé (24), pour ainsi comprimer le matériau de cale liquide (22) et remplir l'espace (9A) ; et
le durcissement, au sein du sac scellé (24) et au sein de l'espace (9A), du matériau de cale liquide comprimé (22) pour former une cale solide (10).

6. Procédé de la revendication 5, dans lequel le positionnement du sac scellé (24) comprend le placement de trous (25), scellés à partir d'un intérieur du sac scellé (24) et s'étendant à travers le sac scellé (24), sur des attaches (9E) d'un ou de plusieurs des composants, et comprenant en outre éventuellement le retrait du sac scellé (24) des attaches (9E) après le durcissement du matériau de cale liquide comprimé (22) pour former la cale solide (10), et comprenant en outre éventuellement l'augmentation d'un volume d'un intérieur du sac scellé (24) avant le déplacement des composants l'un vers l'autre, et/ou dans lequel l'augmentation du volume de l'intérieur du sac scellé (24) comprend la dilatation de parties périphériques (21) du sac scellé (24).

7. Procédé de la revendication 5, comprenant le retrait du sac scellé (24) de la cale solide (10), et éventuellement comprenant en outre le déplacement des composants à l'écart l'un de l'autre avant le retrait du sac scellé (24) de la cale solide (10), et/ou le rognage de la cale solide (10) au sein de l'espace (9A).

8. Procédé de la revendication 7, comprenant la fixation permanente des composants ensemble sur la cale solide (10) après le retrait du sac scellé (24) de la cale solide (10), et comprenant en outre éventuellement le retrait du sac scellé (24) d'une unité de stockage à froid avant le positionnement du sac scellé (24) dans l'espace (9A), et dans lequel éventuellement le déplacement des composants l'un vers l'autre comprend la compression de parties du sac scellé (24) pour comprimer davantage le matériau de cale liquide (22) et remplir l'espace.

9. Procédé de l'une quelconque des revendications 5 à 8, dans lequel le durcissement du matériau de cale liquide comprimé (22) comprend l'exposition du matériau de cale liquide comprimé (22) à température ambiante, et l'application de chaleur localisée au matériau de cale liquide comprimé (22) ; ou dans lequel le durcissement du matériau de cale liquide comprimé (22) comprend l'exposition du matériau de cale liquide comprimé (22) à température ambiante, et ensuite, l'application de chaleur localisée au matériau de cale liquide comprimé (22) ; ou dans lequel le durcissement du matériau de cale liquide comprimé (22) comprend l'application de chaleur localisée au matériau de cale liquide comprimé (22) à l'aide d'une ou de plusieurs opérations parmi le chauffage par convection, le chauffage par infrarouge et le chauffage par résistance électrique.

10. Procédé de création d'une cale liquide, le procédé comprenant : la fourniture d'un matériau de cale liquide (22) dans un sac scellé (24), le matériau de cale liquide (22) pouvant s'écouler à travers un volume interne (26) du sac scellé (24) et pouvant être durci pour former un solide, le matériau de cale liquide (22) comportant un volume de matériau de cale liquide inférieur au volume interne (26) du sac scellé (24).

11. Procédé de la revendication 10, dans lequel la fourniture du matériau de cale liquide (22) dans le sac scellé (24) comprend la fourniture du matériau de cale liquide (22) dans le sac scellé (24) tout en réduisant une pression du volume interne (26) du sac scellé, et éventuellement dans lequel la fourniture du matériau de cale liquide (22) dans le sac scellé (24) comprend l'injection du matériau de cale liquide (22) dans le sac scellé (24).

12. Procédé de l'une quelconque des revendications 10 ou 11, dans lequel la fourniture du matériau de cale liquide (22) dans le sac scellé (24) comprend la fourniture du matériau de cale liquide (22) dans le sac scellé (24) tout en réduisant une pression d'un volume d'air entourant le sac scellé (24), et/ou comprenant la fermeture d'une partie du sac scellé (24) pour réduire le volume interne (26) du sac scellé (24).

13. Procédé de la revendication 12, dans lequel la fermeture de la partie du sac scellé (24) comprend la fermeture de la partie du sac scellé (24) avant la fourniture du matériau de cale liquide (22) dans le sac scellé (24) ; et/ou comprenant en outre l'ouverture de la partie du sac scellé (24) après la fourniture du matériau de cale liquide (22) dans le sac scellé (24) ; et/ou dans lequel la fourniture du matériau de cale liquide (22) dans le sac scellé (24) comprend la diffusion du matériau de cale liquide (22) à travers le volume interne (26) du sac scellé (24).

14. Procédé de l'une quelconque des revendications 10 à 13, comprenant la formation de trous (25) scellés à partir du volume interne (26) et s'étendant à travers le sac scellé (24) avant la fourniture du matériau de cale liquide (22) dans le sac scellé (24), dans lequel la formation des trous (25) comprend éventuellement le scellement thermique des trous (25) ; et/ou dans lequel le procédé comprend le stockage du matériau de cale liquide (22) dans une unité de stockage à froid.

15. Joint (9) entre des composants définissant un espace (9A) entre eux, le joint (9) comprenant : un sac scellé (24) qui comprend une cale durcie disposée au sein de l'espace (9A) et comportant une forme sensiblement semblable à une forme de l'espace (9A), la cale durcie comportant des trous (25) s'étendant à travers celle-ci, le joint (9) comportant des fixations (9E) reliant les composants et s'étendant à travers les trous (25) dans la cale durcie.
